# EUROPÄISCHE PATENTSCHRIFT

(11) **EP 0 796 063 B1**
(45) Veröffentlichungstag und Bekanntmachung des Hinweises auf die Patenterteilung: **06.05.1999**
(21) Anmeldenummer: 95940270.2
(22) Anmeldetag: 04.12.1995
(51) Int. Cl.: A61C 13/00

(54) **VERFAHREN ZUR PATIENTENSPEZIFISCHEN HERSTELLUNG VON UND VERSORGUNG MIT ZAHNPROTHETISCHEN WERKSTÜCKEN**
PROCESS FOR THE CUSTOMISED MANUFACTURE OF DENTAL PROSTHETIC ARTICLES AND DENTAL TREATMENT USING SAME
PROCEDE DE FABRICATION "SUR MESURE" D'ARTICLES PROTHETIQUES DENTAIRES ET PROCEDE DE SOINS DENTAIRES AU MOYEN DESDITS ARTICLES

(30) Priorität: 09.12.1994 DE 4443929
(43) Veröffentlichungstag der Anmeldung: 24.09.1997
(73) Patentinhaber: Schmidt, Volkmar, 65207 Wiesbaden (DE); Platt, Hubertus, 60318 Frankfurt am Main (DE)
(72) Erfinder: Schmidt, Volkmar, 65207 Wiesbaden (DE); Platt, Hubertus, 60318 Frankfurt am Main (DE)
(74) Vertreter: Kruspig, Volkmar, Dipl.-Ing.
(86) Internationale Anmeldenummer: EP9504764
(87) Internationale Veröffentlichungsnummer: WO9617561

(56) Entgegenhaltungen:
- EP-A- 0 345 975

## Beschreibung

Die Erfindung betrifft ein Verfahren zur patientenspezifischen Herstellung von und Versorgung mit zahnprothetischen Werkstücken wie Kronen, Brücken oder dgl. und findet Anwendung im zahnärztlichen und zahntechnischen Bereich.

Bei der Herstellung von Zahnprothesen, beispielsweise Kronen oder Brücken, wird bekanntermaßen im sogenannten Positiv-Negativ-Verfahren gearbeitet. Hierfür ist zunächst eine Präparation der Zähne am Patienten in der zahnärztlichen Praxis notwendig. Diese Präparation schließt das Beschleifen der Zähne im zu versorgenden Kiefer zur späteren Aufnahme einer Krone oder Brücke ein. Nach dem Beschleifen erfolgt eine Abformung des Kiefers sowie eine Bißnahme am Patienten.

Zur Versorgung der abgeschliffenen Zähne bis zur Fertigstellung des prothetischen Werkstückes werden angefertigte Provisorien eingegliedert.

Parallel hierzu wird nun die erhaltene Abformung des Kiefers im Labor ausgegossen, um ein Modell herstellen zu können.

Dieses Modell muß mit höchster Genauigkeit gefertigt werden, da die Toleranz zwischen dem Modell bzw. dem danach gefertigten Werkstück und den abgeschliffenen Zähnen im Bereich von im wesentlichen 25 µm liegt. Aufgrund der Schrumpf- bzw. Volumenänderungseigenschaften des Materials, mit dessen Hilfe Abformungen von Modellherstellungen realisiert werden, ergibt sich das Problem, daß das Lumen der Abformung nicht mit dem Volumen des abgeschliffenen Zahnstumpfes übereinstimmt.

Es stellt sich also das Verfahren zur Herstellung des Modells, um das zahnprothetische Werkstück anfertigen zu können, sehr aufwendig und kompliziert dar. Im Einzelnen muß nämlich der erwähnte Abdruck zur Abformung des Stumpfes und der Umgebung erhalten werden, anschließend wird die so bereitgestellte Negativform ausgegossen. Mittels eines Sägeschnittverfahrens wird dann das betreffende Stumpfteil herausgelöst und im Wachsausschmelzverfahren ein Unterbau für die spätere Anfertigung des zahnprothetischen Werkstückes gefertigt. Dieses Werkstück wird dann in einer Vielzahl von Teilschritten mit mehreren Anproben am Patienten im Wechselspiel zwischen zahnärztlicher Praxis und Labor optimiert. Besonders schmerzhaft und unangenehm ist das hierfür erforderlich werdende, wiederholte Abnehmen und Wiederaufsetzen der Provisorien.

Durch die Schwierigkeiten und Ungenauigkeit bei den Bißnahmen erhöht sich der herstellungsseitige Aufwand weiter und es besteht die Gefahr, daß ein mit großem Aufwand angefertigtes zahnprothetisches Werkstück verworfen werden muß.

Aus der EP 0 345 975 bzw. der zur Patentfamilie gehörigen US 4,941,826 ist eine Zahnbehandlung an einem Positivmodell des Kiefers bzw. der Zähne eines Patienten bekannt. Im einzelnen erfolgt dort eine Abdrucknahme sowie eine Modellerstellung. Das Modell wird für eine nachfolgende Verankerung entsprechend vorbehandelt. Am Modell wird eine Präparation mit Hilfe einer Bearbeitungsmaschine vorgenommen, wobei alle Bewegungen dieser Maschine abgespeichert werden müssen. Die abgespeicherten Daten bilden dann ein sogenanntes Bearbeitungsdokument. Nach der Bearbeitung des Modells wird eine prothetische Arbeit angefertigt und auf die Zähne am Modell gesetzt bzw. entsprechend angepaßt. Unter Nutzung des erwähnten Bearbeitungssdokuments erfolgt nach Positionierung der Bearbeitungsmaschine ein Beschleifen der Zähne im Mund des Patienten, so daß die zahntechnische Arbeit unmittelbar danach eingesetzt werden kann. Die Bearbeitung des Modells erfolgt bei der bekannten Lehre mit der dort im einzelnen beschriebenen Maschine und nicht durch manuelle Anwendung von Schleif- oder Frästechnik durch den jeweiligen Zahntechniker, gestützt auf dessen handwerkliches Geschick und vorliegenden Erfahrungen. Der Einsatz der speziellen Maschine ist deshalb notwendig, da das Bearbeitungsdokument alle Bewegungsdaten der Maschine enthält, um auf der Basis dieser Daten das spätere Beschleifen im Mund des Patienten quasi wiederholen zu können.

Ausgehend vom bekannten Stand der Technik ist es daher Aufgabe der Erfindung, ein Verfahren zur patientenspezifischen Herstellung von und Vorsorgung mit zahnprothetischen Werkstücken dahingehend weiterzubilden, daß die Behandlungszeit verringert wird und eine hohe Präzision bei der Anfertigung prothetischer Werkstücke gewährleistet ist, ohne daß für das Beschleifen eines Modells zu versorgender Zähne eine spezielle Vorrichtung oder Technik erforderlich wird, wodurch die Kosten im Labor des Zahntechnikers gering gehalten werden können.

Die Lösung der Aufgabe der Erfindung erfolgt mit einem Verfahren nach Patentanspruch 1, wobei die Unteransprüche mindestens zweckmäßige Ausgestaltungen und Weiterbildungen umfassen.

Ein wesentlicher Grundgedanke der Erfindung besteht darin, daß, entgegen konventioneller Positiv-Negativ-Technik, ausschließlich in der Positiv-Technik gearbeitet wird, wobei eine Präparation, d. h. Vorbehandlung des zu versorgenden Kiefers mit dem Ziel der späteren Befestigung von Zahnprothesen ausschließlich an einem 1:1-Planungsmodell erfolgt.

Nach Fertigung dieses Planungsmodelles und dem Festlegen der Behandlungsstrategie, d. h. den erforderlichen Prothesen oder sonstigen Werkstücken, wird entweder manuell oder mittels einer numerisch gesteuerten Fräs- oder Schleifvorrichtung eine Präparation des Modelles, d. h. ein Abschleifen der Zähne am Modell, vorgenommen.

Dieses Abschleifen kann unter Rückgriff auf eine Datenbank computerunterstützt nach vorheriger Visualisierung in Verbindung mit der Behandlungsstrategie automatisch erfolgen, wobei aus einer in der Datenbank vorhandenen geometrischen Formenvielfalt besonders zweckmäßige und der jeweiligen Kiefergestalt angepaßte Schleifformen ausgewählt werden.

Nachdem das Planungsmodell präpariert wurde, wird der präparierte Zustand durch optisches und/oder mechanisches Abtasten der vorhandenen geometrischen Konfiguration abgespeichert.

Anschließend wird in bekannter Weise das zahnprothetische Werkstück angefertigt, wobei jedoch dieses ausschließlich unter Zuhilfenahme des Planungsmodelles erfolgt, ohne daß der Patient in Anspruch genommen werden muß. Ebensowenig sind weitere Bißnahmen, Anproben, das Anfertigen und Einsetzen von Provisorien notwendig.

Nachdem das zahnprothetische Werkstück gefertigt und dessen Sitz am Planungsmodell überprüft wurde, erfolgt ein Beschleifen und Präparieren der Zähne im zu versorgenden Kiefer nach den abgespeicherten Daten des präparierten Zustandes des Planungsmodelles. Dieses Beschleifen und Präparieren der Zähne wird mit einer numerisch gesteuerten im oder an der Mundhöhle des Patienten fixierten Fräs- und Schleifvorrichtung durchgeführt.

Diese Fräs- und Schleifvorrichtung ist dabei an vorgegebenen Stützpunkten intraoral angeordnet, oder mit Ausnahme des eigentlichen Schleif- oder Fräskopfes, extraoral vorgesehen.

Direkt nach der Präparation der Zähne am Patienten wird das vorgefertige Werkstück bzw. der Zahnersatz eingegliedert, wodurch das Tragen von Provisorien vermieden wird und eine schmerzhafte Reizung der Schleimhaut bzw. der Pulpa, oder unerwünschte Heiß-/Kaltempfindlichkeiten auf ein Minimum begrenzt sind.

Einem weiteren Grundgedanken der Erfindung folgend wird für die Abformung der Ausgangssituation ein Material verwendet, dessen Volumen beim Form- und Härtevorgang im wesentlichen unverändert bleibt.

In einer Ausführungsform der Erfindung wird vor dem Beschleifen am Planungsmodell der Ausgangszustand desselben oder der Ausgangszustand des zu behandelnden Kiefers durch optisch und/oder mechanisches Abtasten erfaßt und abgespeichert. Unter Zuhilfenahme dieses Datensatzes wird computerunterstützt mit Hilfe einer dreidimensionalen Visualisierung eine Behandlungsstrategie erarbeitet und festgelegt, welche Stützstellen im Kiefer zu wählen sind und welche geometrische Form sich nach Beschleifen und/oder Fräsen, Bohren oder dgl. einstellen soll. Gleichzeitig sind wesentliche Eigenschaften des zahnprothetischen Werkstückes mit Hilfe des Computers simulierbar, wodurch sich der manuelle Aufwand bei der an sich in bekannter Weise erfolgenden Herstellung des zahnprothetischen Werkstückes selbst weiter reduziert.

Das Beschleifen der Zähne am Planungsmodell kann computerunterstützt derart erfolgen, daß aus einer Datenbank vorzugsweise einzuhaltende einfache geometrische Schleifkonfigurationen ausgewählt werden. Dabei können die Datensätze vorzugsweise auszuwählender geometrischer Schleifkonfigurationen in Relation zum Datensatz stehen, welcher den Ausgangszustand des Kiefers bzw. des Planungsmodelles umfaßt. Durch interaktive Mitwirkung des Zahntechnikers und/oder Zahnarztes können Planungsdaten eingegeben oder vorhandene Planungsdaten aktualisiert werden, wodurch sich die Relevanz der von der Datenbank angebotenen geometrischen Konfigurationen, bezogen auf den Ausgangszustand, im Hinblick auf die eingegebenen Erfahrungswerte erhöht.

Zusätzlich besteht die Möglichkeit, durch die Eingabe von Daten, welche mittels Computertomogramm gewonnen wurden, die prothetische Arbeit in ihrer Genauigkeit und Wirksamkeit weiter zu verbessern, wobei diese prothetische Arbeit das Setzen von Implantaten, das Freifräsen von verlagerten Zähnen und das Spalten von Kiefern beim Osteotomieoperationen umfassen kann.

Alles in allem kann dem erfindungsgemäßen Verfahren folgend mit dem numerisch gesteuerten, automatischen Beschleifen, d. h. Präparieren der Zähne im Mund des Patienten anhand eines vorgegebenen, fertigen Datensatzes die gewünschte parallele Lage der Flächen für die ausbildenden Stümpfe in einer Weise realisiert werden, die manuell nicht oder nur mit hohem Aufwand erreichbar ist.

Die erforderlichen Paßgenauigkeiten, d. h. die Toleranzen zwischen dem Ergebnis der Präparation in der Mundhöhle des Patienten und dem angefertigten zahnprothetischen Werkstück sind mit dem erfindungsgemäßen Verfahren ohne aufwendige Nacharbeiten gewährleistet. Gegebenenfalls erforderlich werdende Korrekturen am Planungsmodell können vom Zahnarzt ohne nochmalige Konsultation des Patienten durchgeführt werden, wobei nach Korrektur ein entsprechend aktualisierter Datensatz erstellt wird.

Insgesamt ergibt sich durch das erfindungsgemäße Verfahren eine außerordentlich hohe Paßgenauigkeit der einzugliedernden Werkstücke und eine erhebliche Reduzierung der Arbeitszeit. Gleichzeitig verringert sich die Belastung für Patient und Zahnarzt. Weiterhin entfällt die ansonsten notwendige Zeit des Vorbereitens einer Abdrucknahme nach der Präparation am Patienten, die ansonsten für die Blutstillung, Trocknung und Einbringung der Retraktionsfäden erforderlich ist sowie die Abdrucknahme an den präparierten Zähnen selbst.

Zeitraubende Anproben entsprechend den zahntechnischen Zwischenschritten bei der Herstellung des Werkstückes mit entsprechender, wiederholter Bißregistrierung sind nicht mehr notwendig. Die Wahrscheinlichkeit von Korrekturen oder Neuanfertigungen des zahnprothetischen Werkstückes selbst ist gering.

Durch das Vermeiden von Anproben am Patienten verbessert sich die Planung und der Arbeitsablauf im zahntechnischen Labor, wodurch eine gleichmäßig Auslastung vorhandener Kapazitäten bei steigender Qualität und zuverlässigerer Lieferung der zahnprothetischen Werkstücke gegeben ist.

Die Erfindung soll nachstehend anhand eines Ausführungsbeispieles näher erläutert werden.

Zunächst erfolgt eine Abformung der Situation des zu behandelnden Kiefers einschließlich der Bißnahme in der zahnärztlichen Praxis.

Anschließend wird im zahntechnischen Labor ein Ausgießen der Abformung im Verhältnis 1:1 mit einem geeigneten Gießharz entsprechender Volumenstabilität vorgenommen. Das so erhaltene Planungsmodell wird im Artikulator nach Gesichtsbogen montiert und eine entsprechende Registrierung vorgenommen.

Nunmehr erfolgt ebenfalls im zahntechnischen Labor eine Präparation der zu versorgenden Zähne.

Im Falle des manuellen Beschleifens wird das derart präparierte Planungsmodell optisch und/oder mechanisch abgetastet, so daß die dreidimensionale Konfiguration des präparierten Zustandes als Datensatz zum Betreiben einer numerisch gesteuerten Fräs- und Schleifvorrichtung zur Verfügung steht.

Nachdem der präparierte Zustand des Planungsmodells abgespeichert wurde, kann nun in konventioneller Weise die Fertigstellung des zahnprothetischen Werkstückes im Labor erfolgen.

Diese Fertigstellung greift lediglich auf das vorhandene Planungsmodell zurück, so daß sich eine Inanspruchnahme des Patienten im Fertigungsprozeß selbst vermeiden läßt. Ebensowenig ist das Eingliedern und Wiederanfertigen von Provisorien und/oder eine erneute Bißnahme am Patienten notwendig. Letztendlich kann das fertiggestellte zahnprothetische Werkstück am Planungsmodell versuchsweise angepaßt bzw. eingegliedert werden, so daß sich möglicherweise notwendige Korrekturen beim Eingliedern desselben in den zu behandelnden Kiefer des Patienten reduzieren oder ganz entfallen können.

Der abgespeicherte Datensatz wird anschließend zu einer numerisch gesteuerten Fräs- und Schleifvorrichtung, die sich in der zahnärztlichen Praxis befindet, übertragen. Diese Schleifvorrichtung wird am oder in der Mundhöhle des Patienten fixiert und es wird anhand der zur Verfügung stehenden Daten ein Beschleifen der Zähne vorgenommen.

Das zwischenzeitlich angefertigte zahnprothetische Werkstück kann dann sofort nach Beendigen des Schleifvorganges, d. h. der Präparation, in der Mundhöhle des Patienten anprobiert und zementiert werden.

Durch die Anwendung einer numerisch gesteuerten Fräs- und Schleifvorrichtung, die auf einen Datensatz zurückgreift, der als Soll-Datensatz mittels eines Planungsmodelles geschaffen wurde, kann eine komplette prothetische Versorgung ohne zwischenzeitliche, aufwendige Anproben erfolgen. Da die gesamte zahntechnische Arbeit auf bzw. mit dem Planungsmodell stattfindet und das angefertigte Werkstück erst fertiggestellt in die Mundhöhle eingebracht wird, ergibt sich für den Zahntechniker die Möglichkeit, einen prothetischen Einsatz zu erstellen, ohne daß durch zu kurze Terminsetzung zwischen ansonsten erforderlichen Behandlungen die Qualität bei der Anfertigung des Werkstückes gefährdet wird.

Aufgrund der Fixierung der numerisch gesteuerten Fräs- und Schleifvorrichtung an Referenzpunkten, die mit Hilfe des Planungsmodelles vorgebbar sind, können Ungenauigkeiten, wie diese bei der herkömmlichen Präparation, z. B. bedingt durch schlechte Sicht, erschwerter Zugang zum Arbeitsbereich oder Bewegungen des Patienten auftreten, eliminiert werden.

Das beim Stand der Technik sich ergebende Problem der ungenauen Abdrucknahme nach fertiger Präparation in der Mundhöhle des Patienten entfällt völlig. Letztendlich treten auch keine Ungenauigkeiten durch fehlerhafte Bißregistrate aufgrund von aufgelösten Stützzonen auf, da die Bißnahme im ursprünglichen Zustand vor Auflösung der Abstützung erfolgt.

Zusammenfassend sind also mit dem erfindungsgemäßen Verfahren folgende Optionen realisierbar.

Zum einen läßt sich das Planungsmodell manuell vom Zahnarzt oder Zahntechniker beschleifen und wird dann optisch und/oder mechanisch abgetastet, wobei die Nachpräparation entsprechend den gespeicherten Daten in der Mundhöhle des Patienten vorgenommen wird. Die prothetische Arbeit wird manuell in bekannter Weise durch den Zahntechniker durchgeführt.

In einer anderen Variante wird die prothetische Arbeit nicht manuell durch den Zahntechniker, sondern nach entsprechender Planung durch den Zahntechniker und/oder Zahnarzt unter Zuhilfenahme eines Computermodells durch eine numerisch gesteuerte Vorrichtung automatisch gefertigt.

Alternativ kann das Planungsmodell unter Nutzung der erwähnten Datenbankinformationen automatisch mittels einer numerisch gesteuerten Schleif- und Fräsmaschine gefertigt werden, wobei die Anfertigung der zahnprothetischen Arbeit in manueller Weise durch den Zahntechniker nach dem Stand der Technik erfolgt.

Auch in diesem Falle besteht die Möglichkeit, anstelle einer manuellen Anfertigung der zahnprothetischen Arbeit, diese computergesteuert mittels einer entsprechenden numerischen Werkzeugmaschine vorzunehmen.

Letztendlich ist es möglich, auf die Ausfertigung eines realen Planungsmodelles vollständig zu verzichten und lediglich mit einem Computermodell zu arbeiten, um gemeinsam, gestützt auf Erfahrungswerte des Zahntechnikers und des Zahnarztes, einen Modellentwurf durchzuführen und die Behandlungsstrategie festzulegen sowie Daten zur Herstellung der zahnprothetischen Arbeit zu gewinnen. Insbesondere im letzteren Fall ist es vorteilhaft, wenn unter Nutzung der Computerplanungsdaten die Fertigung der zahnprothetischen Arbeit durch eine numerisch gesteuerte Werkzeugmaschine übernommen wird und das Präparieren bzw. Beschleifen der Zähne im Mund des Patienten entsprechend ebenfalls vorliegender Datensätze mit der numerisch gesteuerten Schleif- und Fräsmaschine erfolgt.

## Patentansprüche

1. Verfahren zur patientenspezifischen Herstellung von und Versorgung mit zahnprothetischen Werkstücken, umfassend folgende Schritte:
- Abformung der Ausgangssituation des zu versorgenden Kiefers einschließlich Bißnahme und Anfertigung eines Positivplanungsmodells hoher Genauigkeit;
- Beschleifen der zu versorgenden Zähne am Planungsmodell;
- optisches und/oder mechanisches Abtasten der nach dem Beschleifen erhaltenen geometrischen Konfiguration des Planungsmodells und Abspeichern der Abtastdaten;
- Anfertigen des zahnprothetischen Werkstückes in bekannter Weise, jedoch ausschließlich mit Hilfe des Planungsmodelles,
- Präparation der zu versorgenden Zähne im Kiefer mittels einer numerisch gesteuerten Fräs- oder Schleifvorrichtung unter Rückgriff auf die gespeicherten Abtastdaten.

2. Verfahren nach Anspruch 1,
**gekennzeichnet durch**
die Abformung der Ausgangssituation mit einem Material, vorzugsweise Gießharz, dessen Volumen beim Form- und Härtevorgang im wesentlichen unverändert bleibt.

3. Verfahren nach Anspruch 1 oder 2,
**dadurch gekennzeichnet,**
daß das Planungsmodell in einem Artikulator nach Gesichtsbogen und/oder zentrischer Relation fixiert wird.

4. Verfahren nach einem der Ansprüche 1 bis 3,
**gekennzeichnet durch**
das Beschleifen zu versorgender Zähne am Planungsmodell mittels einer numerisch gesteuerten Fräs- und Schleifvorrichtung nach einem Muster-Präparationsdatensatz einfacher Geometrie, welcher aus einer Datenbank entsprechend der Behandlungstrategie ausgewählt ist.

5. Verfahren nach einem der Ansprüche 1 bis 4,
**dadurch gekennzeichnet,**
daß nach Abspeicherung der Abtastdaten mit diesen eine computergestützte, dreidimensional-visualisierte Planung des anzufertigenden zahnprothetischen Werkstückes erfolgt.

6. Verfahren nach einem der Ansprüche 1 bis 3,
**dadurch gekennzeichnet,**
daß vor dem Beschleifen der Ausgangszustand des Planungsmodells durch optisches und/oder mechanisches Abtasten erfaßt und abgespeichert wird, wobei anschließend mittels des so erhaltenen Datensatzes eine computerunterstützte, dreidimensionale Visualisierung erfolgt und für den nachfolgenden Präparationsschritt optimale Schleif- und/oder Fräsgeometrien eingegeben oder aus einer Datenbank übernommen werden.

## Claims

1. Method of patient specific manufacture of and treatment with dental prosthetic workpieces, comprising the following steps:
- casting of the intitial situation of the jaw to be treated, including a cast of the bite and preparation of a positive draft model of high accuracy;
- grinding of teeth to be treated on the draft model;
- optical and/or mechanical scanning of the geometric configuration of the draft model obtained after grinding and storage of the scanning data;
- preparation of the dental prosthetic workpiece in a known way, yet purely with the aid of the draft model;
- preparing teeth to be treated in the jaw according to the stored scanning data by means of a numerically controlled milling or grinding device.

2. Method according to claim 1,
characterised by
the casting of the initial situation in a material, preferably casting resin, the volume of which remains substantially unaltered during the moulding and hardening process.

3. Method according to claim 1 or 2,
characterised in that
the draft model is fixed in an articulator according to the arc of view and/or central relation.

4. Method according to one of claims 1 to 3,
characterised by
grinding of teeth to be treated on the draft model by means of a numerically controlled milling and grinding device according to a pattern preparation data set of simple geometry being selected from a data bank according to the treatment strategy.

5. Method according to one of claims 1 to 4,
characterised in that
after storage of the scanning data, a computer controlled, three-dimensionally visualised planning of the dental prosthetic workpiece to be prepared is undertaken on the basis thereof.

6. Method according to one of claims 1 to 3,
characterised in that
before grinding the initial condition of the draft model is detected by optical and/or mechanical scanning and stored, then, by means of the data set thereby obtained, a computer controlled, three-dimensional visualisation is undertaken, and optimum grinding and/or milling geometries are input or taken up from a data bank for the subsequent preparation step.

## Revendications

1. Procédé pour la fabrication et l'approvisionnement d'éléments de prothèse dentaire de manière spécifique vis-à-vis des patients, comprenant les opérations suivantes :
- moulage de la situation de départ de la mâchoire à traiter, y compris moulage de la dentition et réalisation d'un modèle de planification positif de haute précision ;
- meulage des dents à traiter sur le modèle de planification ;
- palpage optique et/ou mécanique de la configuration géométrique obtenue après meulage du modèle de planification et mémorisation des données de palpage ;
- fabrication de l'élément de prothèse dentaire de manière connue, mais exclusivement avec l'aide du modèle de planification, et
- préparation des dents à implanter dans la mâchoire au moyen d'un dispositif de fraisage ou de ponçage à commande numérique en se rapportant aux données de palpage mémorisées.

2. Procédé selon la revendication 1, caractérisé par l'opération consistant à mouler la situation de départ avec un matériau, de préférence de la résine de moulage, dont le volume est sensiblement sans modification lors de l'opération de moulage et de durcissement.

3. Procédé selon l'une ou l'autre des revendications 1 et 2, caractérisé en ce que le modèle de planification est fixé dans un articulateur suivant les courbes du visage et/ou en relation centrale.

4. Procédé selon l'une des revendications 1 à 3, caractérisé par l'opération consistant à meuler les dents à implanter sur le modèle de planification au moyen d'un dispositif de fraisage et de meulage à commande numérique, selon un modèle de jeu de données de préparation à simple géométrie, lequel est choisi à partir d'une base de données en correspondance de la stratégie de traitement.

5. Procédé selon l'une des revendications 1 à 4, caractérisé en ce que, après mémorisation des données de palpage on procède avec celles-ci à une planification assistée par ordinateur et visualisée en trois dimensions de l'élément de prothèse dentaire à fabriquer.

6. Procédé selon l'une des revendications 1 à 3, caractérisé en ce que, avant le ponçage, l'état de départ du modèle de planification est déterminé par palpage optique et/ou mécanique et mémorisé, et l'on procède ensuite au moyen du jeu de données ainsi obtenu à une visualisation assistée par ordinateur en trois dimensions, et en ce que pour l'opération de préparation qui suit on entre des géométries de ponçage et/ou de fraisage optimales, ou bien on les reprend d'une base de données.
